# EUROPEAN PATENT APPLICATION

(11) **EP 3 489 529 A1**
(43) Date of publication of application: **29.05.2019**
(21) Application number: 17306646.5
(22) Date of filing: 27.11.2017
(51) Int. Cl.: F15B 13/02, F15B 13/042, F15B 13/044, F15B 13/043

(54) **MODE VALVE ASSEMBLY**

(71) Applicant: Goodrich Actuation Systems SAS, 95310 Saint-Ouen-l'Aumone (FR)
(72) Inventor: SOCHELEAU, Jérôme, 78540 Vernouillet (FR); CARLIER, Yvan, 78530 Buc (FR)
(74) Representative: Dehns

(57) **Abstract**

A mode valve comprising a spool axially moveable within a sleeve in response to a control (e.g. hydraulic or electro-mechanical) command, the spool comprising channels and lands, and the sleeve comprising ports in fluid communication with a hydraulic fluid supply and ports in connection with control chambers of an actuator responsive to the valve, wherein the mode valve comprises first drive means for moving the spool, relative to the sleeve, between a first position, in which fluid can flow through the mode valve from the fluid supply to the actuator chambers, and a second position in which fluid flow from the fluid supply to the actuator chambers through the valve is blocked and wherein a fluid path with a first pressure drop is defined in the mode valve for fluid flow between actuator chambers; the mode valve comprising second drive means for moving the spool relative to the sleeve to a third position in which fluid flow from the fluid supply to the actuator chambers through the valve is blocked and wherein a fluid path with a second pressure drop is defined in the mode valve for fluid flow between actuator chambers.

## Description

### TECHNICAL FIELD

The present disclosure relates to mode valves used to manage the control of fluid and thereby to manage the control of moveable surfaces e.g. to control a hydraulic flight control actuator.

### BACKGROUND

Mode valves find a wide range of applications for controlling air or fluid flow to effect driving or control of another part e.g. an actuator.

Mode valves are well-known in drive or actuator systems to select a functional mode. Conventional spool/sleeve mode valves comprise a spool, linearly moveable within a bore or sleeve in a valve cylinder or housing in response to a control input, such as to enable hydraulic fluid flow paths through the valve to a port to provide output drive power. The spool moves between an ON and an OFF state at respective ends of the sleeve.

Conventionally, electro-hydraulic primary flight control actuators incorporate two modes of operation from a single spool/sleeve valve, namely an active mode and a damped mode. In the active mode, the actuator drives the surface of e.g. the aircraft. In the damped mode, the actuator is back-driven by the surface (aerodynamic load or adjacent active actuator) and provides a drag load.

In the active mode, the spool is positioned in the sleeve such that fluid from a fluid distributor or driver such as a servovalve flows into the chambers of the actuator to drive the actuator to move the surface. In the damped mode, the spool is positioned within the sleeve so that the fluid from the servovalve cannot flow through the spool/sleeve ports into the actuator chambers and, instead, the lands and ports of the spool/sleeve are aligned so as to fluidly connect the actuator chambers such that fluid in the system flows between the actuator chambers. The easier the fluid circulates, the less drag is generated on the actuator rod motion. One of the ports of the spool/sleeve valve defining the fluid path between the actuation chambers is a damping orifice which is a small orifice to restrict the fluid path. This creates a pressure drop between the actuator chambers and results in a drag force on the actuator rod motion.

More recently, there have been calls for actuators to have a third mode of operation, e.g. a bypass mode where no drag force is created and, hence, no resistance to movement of the surface, e.g. in the case of hydraulic failure.

One solution that has been considered is to provide two spool/sleeve valves to control the actuator, namely a conventional active/damped spool/sleeve valve and, in addition, a second spool for the bypass mode. This would, of course, considerably add to the size and weight of the actuator control system, and the solution has not been pursued.

The present disclosure aims to meet the need for a three-mode actuator with an improved spool/sleeve valve arrangement.

### SUMMARY

According to an embodiment, the disclosure provides a mode valve assembly comprising a spool axially moveable within a sleeve in response to a command, the spool comprising channels and lands, and the sleeve comprising ports in fluid communication with a hydraulic fluid supply and ports in connection with control chambers of an actuator responsive to the valve, wherein the mode valve comprises first drive means for moving the spool, relative to the sleeve, between a first position, in which fluid can flow through the mode valve from the fluid supply to the actuator chambers, and a second position in which fluid flow from the fluid supply to the actuator chambers through the valve is blocked and wherein a fluid path with a first pressure drop is defined in the mode valve for fluid flow between actuator chambers; the mode valve comprising second drive means for moving the spool relative to the sleeve to a third position in which fluid flow from the fluid supply to the actuator chambers through the valve is blocked and wherein a fluid path with a second pressure drop is defined in the mode valve for fluid flow between actuator chambers.

In a preferred embodiment, the first drive means comprises a solenoid valve causing movement of the spool by application of fluid pressure to one end of the spool according to the desired position of the spool, and the second drive means is means for applying an electrical signal to cause movement of the spool to the third position.

The electrical signal may be applied to the spool by being applied by an electromechanical solenoid to move a drive member to mechanically move the spool. The drive member may be e.g. a pin that pushes against the spool.

In the preferred embodiment, the third mode is a bypass mode where the fluid flow path between the actuator chambers is via orifices in the spool/sleeve valve that are larger than the orifices defining the flow path in the damped mode, such that a lower pressure drop, or even substantially no pressure drop, is created between the fluidly connected actuator chambers.

According to another aspect, the disclosure provides a method of controlling a mode valve comprising a spool axially moveable within a sleeve for selective operation in three modes, the method comprising: controlling a first drive means to move the spool, relative to the sleeve, between a first position, in which fluid can flow through the mode valve from the fluid supply to control chambers of an actuator, and a second position in which fluid flow from the fluid supply to the actuator chambers through the valve is blocked and wherein a fluid path with a first pressure drop is defined in the mode valve for fluid flow between actuator chambers; and controlling a second drive means to move the spool relative to the sleeve to a third position in which fluid flow from the fluid supply to the actuator chambers through the valve is blocked and wherein a fluid path with a second pressure drop is defined in the mode valve for fluid flow between actuator chambers.

Preferred embodiments will now be described by way of example only with reference to the drawings.

### BRIEF DESCRIPTION OF THE DRAWINGS

FIG 1 is a schematic view of a conventional mode valve.
Fig. 2 is a schematic diagram showing the system when operating in the active mode.
Fig. 3 is a schematic diagram showing the system when operating in the damped mode.
Fig. 4 is a schematic diagram showing the system when operating in the bypass mode

### DETAILED DESCRIPTION

A mode valve as described below can, for example, be used in an actuator control system. The mode valve is controlled by a drive assembly to control a flow of fluid that is output via e.g. a so called solenoid valve to enable the movement of the spool of the mode valve.

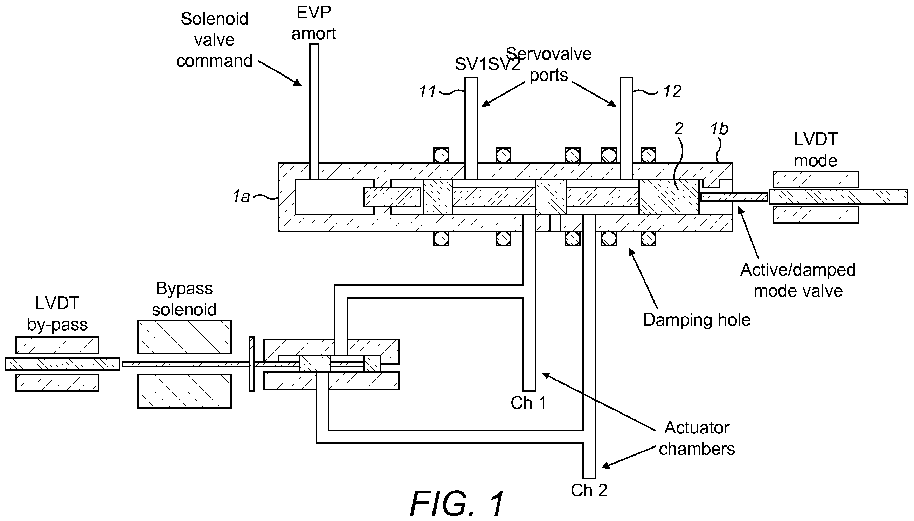

A conventional mode valve will first be described with reference to Fig. 1.

A typical mode valve is shown in Fig. 1. The assembly comprises a spool 2 axially moveable between two ends 1 a, 1 b of a sleeve 1. Operation of the valve comprises causing the spool 2 to move to the left and/or right so as to align ports in the spool 2 with fluid channels to control the flow of fluid through the valve and out of a control port into actuator control chambers to control the actuator or other moveable part. The movement of the spool 2 is caused by the pressure of the hydraulic fluid acting on one end of the spool 2 via channels 11,12. The control pressure is generally applied at one end of the spool and a spring (not shown) is installed at the opposite end. When the load generated by the pressure on one end is higher than the load generated by the spring, the spool displaces in the spring direction (active mode). When the load generated by the spring is higher than the load generated by the pressure on the other end, the spool displaces in the control pressure port direction. In an example, the assembly is arranged to control an actuator based on the fluid flow from the control port e.g. via a solenoid valve.

Supply pressure is provided to the mode valve housing or sleeve 1 and to the spool via supply ports 11,12 (possibly from a servovalve.

The spool 2 is in the form of a tubular member arranged in a valve block or sleeve 1 to be moved axially by the hydraulic fluid.

As mentioned above, in such conventional systems, the valve is only able to operate in two modes - an active mode and a damped mode. The assembly of the present disclosure enables a third mode of operation e.g. a bypass mode.

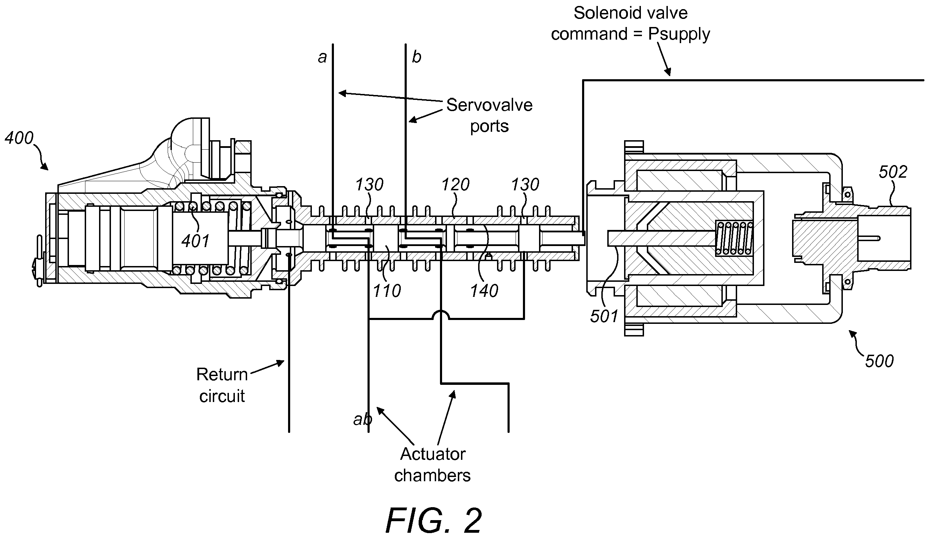

With reference to Fig. 2, when an actuator 100 is to be controlled to drive a moveable surface (not shown), a command signal is sent on line 101 to the servovalve (not shown) and to the solenoid valve 500. Solenoid valve sends a command Psupply, whereby pressure acts on the spool 110 to cause it to move against the force of the return spring 401 of the mode valve/position sensor 400 which causes the spool 110 to move to the left, in Fig. 2, within the sleeve 120. The spool is moved so that the ports 130 in the sleeve and openings 140 in the spool are aligned to define flow paths through the spool/sleeve valve for the servovalve control fluid, this fluid thus entering the spool/sleeve valve, travelling through the valve via the fluid flow paths and exiting the spool/sleeve valve and flowing into the actuator chambers to control movement of the actuator to, in turn, drive the surface. The flow paths for the control fluid in the active mode are indicated by letters a and b.

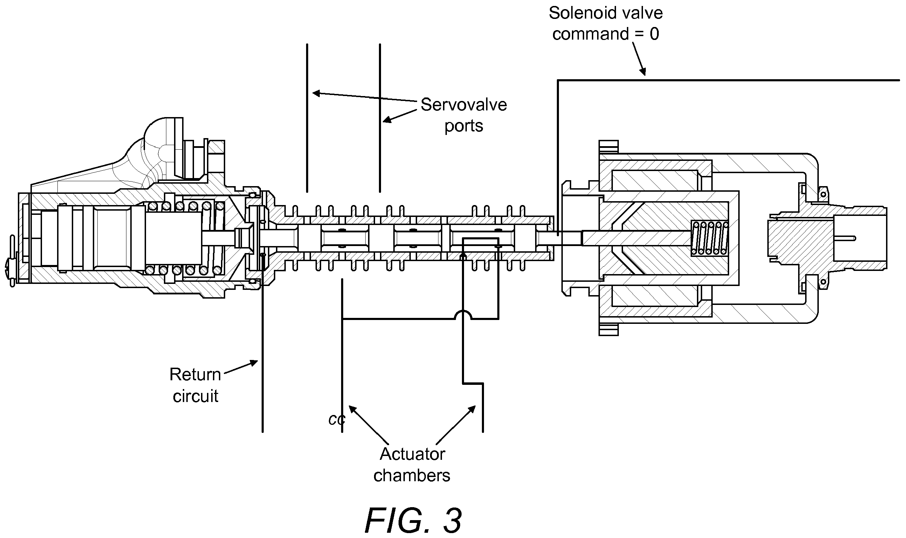

For operation in the damped mode, shown in Fig. 3, the pressure signal from the solenoid valve is OFF and so no pressure is applied from the solenoid valve against the spool. This means that the spool moves to the right, in Fig. 3, under the return force of the spring 401 to a position wherein the lands of the spool block the sleeve ports for the servovalve control fluid thus preventing this fluid flowing through the valve to the actuator. A flow channel in the spool is, however, aligned with damping orifices in the sleeve which connect the chambers of the actuator to each other. The damping orifices are small such that they cause a pressure drop on the fluid flow between the actuator chambers which creates a drag force in the motion control, thus ensuring the return movement of the surface when no longer under control of the spool/sleeve valve is damped. The flow between the actuator chambers with pressure drop is indicated by path c.

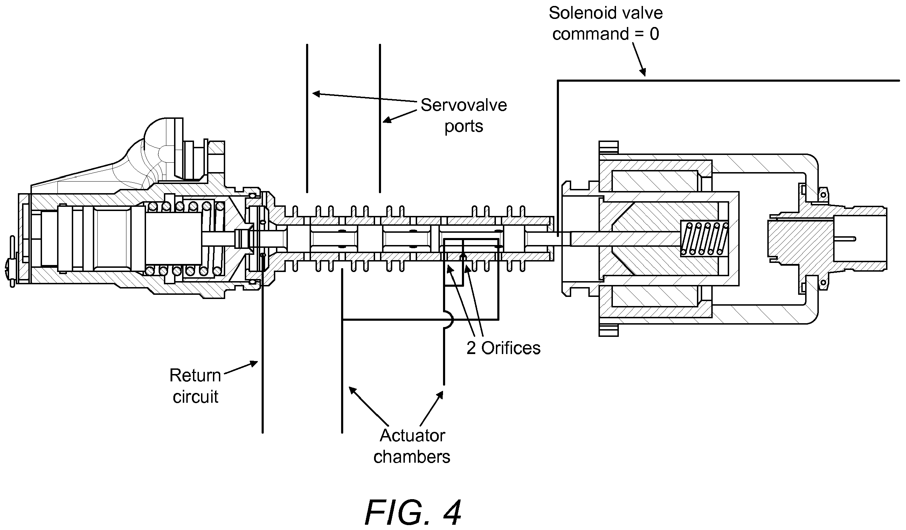

The present disclosure provides a system in which the same spool/sleeve valve that can be operated in active and damped modes can also provide operation in a third, different mode, e.g. a bypass mode, shown in Fig. 4. The additional functionality is enabled by means of a separate drive means, e.g. an electromechanical solenoid 500. This, in the preferred example, comprises a biased pin 501 which can be moved in response to an electrical signal from a drive motor 502. For operation in the third mode, the pressure from the solenoid valve is OFF as for the above described damped mode and so the spool is biased to the right and flow from the servovalve ports to the actuation chambers is blocked. The electrical command signal, however, causes the pin to move against the direction of bias of the spool; the pin engages with the spool and pushes the spool to the left. The stroke of the pin, however, is less than the stroke of the spool spring and so the pin does not push the spool all the way back to the active mode position within the sleeve; instead, the pin pushes the spool so that the servovalve ports are still blocked by lands of the spool but, instead of the flow path between the actuation chambers being defined via the damping orifices as in the damping mode described in relation to Fig. 3, flow between the actuator chambers is via different orifices, in the case of bypass operation, these orifices are larger such that no pressure drop is created in the fluid flow path between the actuation chambers. As the actuation chambers are now connected with no, or very little pressure drop, no drag force is created. In an alternative embodiment, the third mode could be a heavy damping mode, rather than a bypass mode, in which case, the fluid path in the third mode would be defined by smaller damping orifices to increase the pressure drop.

Thus, the arrangement of this disclosure allows operation in three different modes - active mode and damped mode and also a third mode e.g. bypass mode - using just a single spool/sleeve valve. This keeps the number of parts, and, hence, the overall size, weight and cost of the system to a minimum whilst maintaining reliability. Having the third (e.g. bypass) mode on actuators can improve aircraft availability.

Although this disclosure has been described in terms of preferred examples, it should be understood that these examples are illustrative only and modifications and alterations are possible within the scope of the claims.

## Claims

1. A mode valve comprising: a spool (110) axially moveable within a sleeve (120) in response to a control command, the spool comprising channels and lands, and the sleeve comprising ports in fluid communication with a hydraulic fluid supply and ports in connection with control chambers of an actuator responsive to the valve, wherein the mode valve comprises first drive means (300) for moving the spool, relative to the sleeve, between a first position, in which fluid can flow through the mode valve from the fluid supply to the actuator chambers, and a second position in which fluid flow from the fluid supply to the actuator chambers through the valve is blocked and wherein a fluid path with a first pressure drop is defined in the mode valve for fluid flow between actuator chambers; the mode valve comprising second drive means (200) for moving the spool relative to the sleeve to a third position in which fluid flow from the fluid supply to the actuator chambers through the valve is blocked and wherein a fluid path with a second pressure drop is defined in the mode valve for fluid flow between actuator chambers.

2. The mode valve of claim 1, wherein the first drive means comprises a solenoid valve (300) causing movement of the spool by application of fluid pressure to one end of the spool according to the desired position of the spool, and the second drive means is means for applying an electrical signal to cause movement of the spool to the third position.

3. The mode valve of claim 2, wherein the means for applying an electrical signal comprises an electromechanical solenoid to move a drive member to mechanically move the spool.

4. The mode valve of claim 3, wherein the drive member comprises a pin that pushes against the spool.

5. The mode valve of any preceding claim, wherein the third mode is a bypass mode where the fluid flow path between the actuator chambers is via orifices in the spool/sleeve valve that are larger than the orifices defining the flow path in the damped mode, such that a lower pressure drop is created between the fluidly connected actuator chambers.

6. A method of controlling a mode valve comprising a spool axially moveable within a sleeve for selective operation in three modes, the method comprising: controlling a first drive means to move the spool, relative to the sleeve, between a first position, in which fluid can flow through the mode valve from the fluid supply to control chambers of an actuator, and a second position in which fluid flow from the fluid supply to the actuator chambers through the valve is blocked and wherein a fluid path with a first pressure drop is defined in the mode valve for fluid flow between actuator chambers; and controlling a second drive means to move the spool relative to the sleeve to a third position in which fluid flow from the fluid supply to the actuator chambers through the valve is blocked and wherein a fluid path with a second pressure drop is defined in the mode valve for fluid flow between actuator chambers.
